(19) Europäisches Patentamt
European Patent Office
Office européen des brevets

(11) **EP 4 474 785 B1**

(12) **EUROPÄISCHE PATENTSCHRIFT**

(45) Veröffentlichungstag und Bekanntmachung des Hinweises auf die Patenterteilung:
**10.09.2025   Patentblatt 2025/37**

(21) Anmeldenummer: **24173944.0**

(22) Anmeldetag: **02.05.2024**

(51) Internationale Patentklassifikation (IPC):
**G01K 17/06** (2006.01)      **F24D 19/10** (2006.01)
**G06N 3/09** (2023.01)      **G06N 5/01** (2023.01)
**G06N 20/20** (2019.01)

(52) Gemeinsame Patentklassifikation (CPC):
**G01K 17/06; F24D 19/1048; G06N 3/09; G06N 5/01; G06N 20/20**

(54) **VERFAHREN ZUR ERMITTLUNG DER RAUMTEMPERATUR**

METHOD FOR DETERMINING ROOM TEMPERATURE

PROCÉDÉ DE DÉTERMINATION DE LA TEMPÉRATURE AMBIANTE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität:   **05.06.2023   DE 102023114697**

(43) Veröffentlichungstag der Anmeldung:
**11.12.2024   Patentblatt 2024/50**

(73) Patentinhaber: **Techem Energy Services GmbH
65760 Eschborn (DE)**

(72) Erfinder:
• **Kähler, Arne
  61350 Bad Homburg (DE)**
• **Vollmari, Kevin
  60320 Frankfurt am Main (DE)**
• **Heide, Alexander
  60438 Frankfurt am Main (DE)**

(74) Vertreter: **2K Patentanwälte Blasberg Kewitz & Reichel
Partnerschaft mbB
Schumannstrasse 27
60325 Frankfurt am Main (DE)**

(56) Entgegenhaltungen:
**EP-B1- 1 235 130     KR-A- 20230 071 334**

**Beschreibung**

Die Erfindung betrifft ein Verfahren und ein System zur präziseren Ermittlung der Raumtemperatur in einem Raum einer Nutzeinheit eines Gebäudes, basierend auf Messwerten von kommunikationsfähigen elektronischen Heizkostenverteilern, insbesondere von Funk-Heizkostenverteilern (FHKV), die an Heizkörpern in diesem Raumen installiert sind.

Unter Nutzeinheiten eines Gebäudes sind Wohnungs-, Büro-, Geschäfts-, Gewerbe- oder Industrieräumlichkeit, deren Wärmeversorgung durch eine gemeinsame Zentralheizungsanlage oder über einen gemeinsamen Fernwärmeanschluss erfolgt, zu verstehen (Quelle: DIN EN 834-2017)

In Nutzeinheiten, in denen das erfindungsgemäße Verfahren durchgeführt werden kann, gibt es zumindest einen Raum, typischerweise mehrere Räume. In dem mindestens einen Raum befindet sich mindestens ein Heizkörper, an dem mindestens ein kommunikationsfähiger elektronische Heizkostenverteiler angebracht ist. In einem oder mehreren Räumen einer oder mehrerer Nutzeinheiten des Gebäudes oder eines anderen Gebäudes, können vom kommunikationsfähigen elektronischen Heizkostenverteiler unabhängige kommunikationsfähige Raumtemperatursensoren vorhanden sein. Solche Raumtemperatursensoren können permanent in dem Raum installiert sein, sie können aber auch nur für eine gewisse Zeitdauer (temporär) in einem Raum vorhanden sein. Ein Raum, in dem ein zusätzlicher Raumtemperatursensor vorhanden ist, wird im Folgenden als "zweiter Raum" bezeichnet, im Sinne von erster Messausstattungsart bzw. Messtrecke des Raums. Im Gegensatz zum zweiten Raum ist in einem im Folgenden als "erster Raum" bezeichneten Raum kein vom kommunikationsfähigen elektronischen Heizkostenverteiler unabhängiger kommunikationsfähiger Raumtemperatursensor vorhanden.

Elektronische Heizkostenverteiler nach der Norm DIN EN 834 können nach dem Zweifühler-Messverfahren betrieben werden. Ein solcher elektronischer Heizkostenverteiler ist beispielsweise in der europäischen Patentschrift EP 1 235 130 B1 beschrieben.

Arbeitet der elektronischen Heizkostenverteiler im Zweifühlerbetrieb, also mit zwei Temperatursensoren, so misst er die Temperatur der Heizkörperoberfläche, die als Heizkörperseitige Temperatur $\vartheta_{HS}$, bzw. als $\vartheta_{HKS}$ des elektronischen Heizkostenverteilers bezeichnet wird und die Temperatur der Raumluft, die als Raumseitige $\vartheta_{RS}$ oder auch als Raumluftseitige $\vartheta_{RLS}$ Temperatur des elektronischen Heizkostenverteilers bezeichnet wird.

Die vom elektronischen Heizkostenverteiler gemessenen Temperaturwerte $\vartheta_{RS}$ ($\vartheta_{RLS}$) und $\vartheta_{HS}$ ($\vartheta_{HKS}$) werden im Folgenden als Rohtemperaturen bezeichnet. Der raumseitig gemessene Temperaturwert $\vartheta_{RS}$ entspricht nicht exakt dem tatsächlichen Raumtemperaturwert, da insbesondere für die Ermittlung der tatsächlichen Raumtemperatur der Messpunkt in unmittelbarer Nähe des Heizkörper nicht optimal geeignet ist, auch nicht bei der Ausprägung des elektronischen Heizkostenverteilers als Fernfühlergerät. Die tatsächliche Raumtemperatur ist allerdings eine wesentliche physikalische Größe zur energetischen Bewertung von Gebäuden mit energetischen Kenngrößen und außerdem eine wesentliche Größe zur wärmephysiologischen Beurteilung der Behaglichkeit für die Bewohner.

Es besteht daher der Bedarf nach einer genaueren Ermittlung einer Raumtemperatur in beheizten Räumen, als dies mit einem elektronischen Heizkostenverteiler durch Messung der Raumtemperatur an dessen Montagepunkt am Heizkörper möglich ist, wobei jedoch die Kostenvorteile durch den Verzicht auf einen zusätzlich zum elektronischen Heizkostenverteiler zu installierenden Raumtemperatursensor bleiben sollen.

Entsprechend der Europäischen Energieeffizienzrichtlinie EED 2018 sollen spätestens ab 2024 in Neuinstallationen nur noch kommunikative, fernablesbare elektronische Verbrauchserfassungsgeräte eingesetzt werden. Mit den durch diese Geräte ermittelten und durch Fernablesung an eine Zentrale übertragenen Verbrauchswerten kann durch unterjährigen, insbesondere monatlichen Mitteilung des Verbrauchswerte oder eines als thermischen Komforts für den Wohnungsnutzer abgeleiteten Kenngröße den Nutzern der Nutzeinheit eine Verbrauchstransparenz ermöglicht werden. Dabei bieten Tageswerte oder sogar höhere zeitliche Auflösungen der Messwerte oder auch Kennzahlen Vorteile für den Nutzer und/oder die Hausverwaltung als Immobilienbetreiber. Zur Beeinflussung des Nutzerverhaltens hin zu einem geringeren Energieverbrauch kommt einer genauen und dynamischen Ermittlung der tatsächlichen Raumlufttemperatur oder zumindest einer möglichst genauen Raumtemperatur eine besondere Bedeutung zu.

Es ist daher Aufgabe der Erfindung, ein Verfahren und ein System zur Ermittlung der Raumtemperatur in einem ersten Raum eines ersten Gebäudes anzugeben, welches eine möglichst exakte, dynamische Ermittlung der Raumtemperatur mit einem Funk-Heizkostenverteiler ermöglicht.

Diese Aufgabe wird erfindungsgemäß gelöst, indem aus zumindest einer raumluftseitigen Temperatur und einer heizkörperseitigen Temperatur, die von einem in dem ersten Raum angeordneten Funk-Heizkostenverteiler gemessen werden, und einem trainierten Parametersatz eines dynamischen Raumtemperaturmodells eine Raumtemperatur des ersten Raumes ermittelt wird, wobei der Parametersatz des dynamischen Raumtemperaturmodells vorab aus Trainingsdaten einer Vielzahl von zweiten Räumen im ersten oder in zweiten Gebäuden erzeugt wurde, wobei die Trainingsdaten an in den zweiten Räumen angeordneten Funk-Heizkostenverteilern gemessene raumluftseitige Temperaturen, heizkörperseitige Temperaturen und in den zweiten Räumen separat vom Funk-Heizkostenverteiler gemessene Raumtemperaturen enthalten.

Die Erfindung geht dabei von der Überlegung aus, dass eine besonders genaue, dynamische Ermittlung der Raumtemperatur nur gelingen kann, wenn hierzu auf zusätzlich vorliegende Daten zurückgegriffen wird. Hierbei wurde erkannt, dass die Daten von zweiten Räumen, in denen elektronische Heizkostenverteiler angeordnet sind und zusätzlich zumindest ein kommunikationsfähiger Raumsensor vorzugsweise zentral im Raum angeordnet ist, vorteilhaft genutzt werden können. Für diese zweiten Räume werden die Trainingsdaten für das erfindungsgemäße dynamische Raumtemperaturmodell ermittelt, derart dass - nach dem Training - die aus dem dynamischen Raumtemperaturmodell gewonnenen Werte korrigierend auf die Rohmessdaten des elektronischen Heizkostenverteilers in dem ersten Raum angewendet werden und dadurch einen präziserer Wert für die Raumtemperatur auch in Räumen ermittelt wird, die lediglich mit Funk-Heizkostenverteilern und nicht mit einem separaten Raumtemperatursensor ausgestattet sind.

In einer vorteilhafter Ausgestaltung des Verfahrens wird die Raumtemperatur anhand einer Anzahl von vorab ermittelten Kenngrößen und/oder zusätzlichen Messgrößen des ersten Raumes und/oder des ersten Gebäudes ermittelt, wobei die Trainingsdaten die jeweils entsprechenden Kenngrößen und/oder Messgrößen der zweiten Räume und/oder des zweiten Gebäudes enthalten. Das dynamische Raumtemperaturmodell kann erfindungsgemäß weiter verbessert und damit auch die Genauigkeit der ermittelten Raumtemperatur erhöht werden, indem das Modell mit zusätzlichen Werten (Messwerte, Mittelwerte gebildet aus den Messwerten, Schätzwerte) und Kenngrößen von weiteren die Raumtemperatur beeinflussenden meteorologischen, physikalischen oder bau- oder anlagentechnischen Größen oder auch mit Gebäudemerkmalen trainiert wird. Es werden also vorteilhafterweise zusätzliche Modelleingangsgrößen berücksichtigt, die einen wesentlichen Einfluss auf das dynamische Raumtemperaturmodell haben

Als die eine Raumtemperatur beeinflussenden Gebäudemerkmale werden vorteilhafterweise zumindest der Gebäudetyp (Mehrfamilienhaus, Zweifamilienhaus, Reihenhaus, Einfamilienhaus)und das genaue Alter des Gebäudes (Baujahr) und/oder eine Kenngröße für den beim Bau verwendeten Baustoff im Sinne von Kompaktheit des Gebäudes und/oder der Zustand nach einer Sanierung und/oder besonders bevorzugt die energetische Klassifizierung des Gebäudes, die z.B. in Form des U-Wertes oder des spezifischen Raumheizwärmeverbrauchs oder durch die Zuordnung zu einem energetischen Standard wie etwa der Baualtersklasse oder der Wärmeschutzverordnung (z.B. WSVO 95) bzw. der Energieeinsparverordnung (EnEV02, EnEV07, etc.) berücksichtigt. Weiterhin können vorteilhafterweise Informationen auf Wohnungsebene z.B. der Raumtyp, die Raum- und Wohnungsgröße, oder der Heizkörpertyp mit in die Modellbildung einfließen.

Als die Raumtemperatur beeinflussenden physikalischen oder anlagentechnischen oder meteorologischen Größen werden vorteilhafterweise zumindest die Außentemperatur und/oder die Vorlauftemperatur des Heizmediums und/oder die Rücklauftemperatur des Heizmediums und/oder die Dauer der Sonneneinstrahlung auf das Gebäude, besonders bevorzugt ein Faktor für den Fremdwärmeeintrag (Wärme durch Sonneneinstrahlung) in den Raum und/oder die Windrichtung und/oder -geschwindigkeit im dynamischen Raumtemperaturmodell als weitere Eingangsparameter berücksichtigt.

Erfindungsgemäß können die Trainingsdaten in dynamische und quasistationäre Zustände klassifiziert werden und das dynamische Raumtemperaturmodell wird ausschließlich aus den als quasistationäre Zustände klassifizierten Trainingsdaten erzeugt. Die erfindungsgemäße Klassifizierung der Trainingsdaten kann anhand von zeitlichen Ableitungen der Messwerte, Gradienten- oder Differenzbildungen und deren Bewertung mit geeigneten Bewertungsfaktoren erfolgen. Erfindungsgemäß werden für die Ermittlung der Raumtemperatur anhand des erfindungsgemäßen dynamischen Raumtemperaturmodells weitgehend die Messwerte der als stationäre Zustände erkannten Zustände ausgewertet, da hierdurch die Genauigkeit der Ermittlung der Raumtemperatur weiter verbessert wird.

Für die Umsetzung des erfindungsgemäßen dynamischen Raumtemperaturmodells sind verschiedene Konzepte geeignet. Das Verfahren zur Ermittlung der Raumtemperatur mit einem dynamischen Raumtemperaturmodell kann ein Polynombasiertes Modell verwenden, vorteilhaft verwendet das Verfahren ein Künstliche-Intelligenz-(KI-)Modell auf Basis von trainierten neuronalen (Multi-Layer-)Netzen oder ein KI-Modell auf Basis von trainierten Entscheidungsbäumen beispielsweise Ensemblemethoden wie etwa Random Forest oder Gradient Boost, oder einem KI-Modell auf Basis maschineller Lernverfahren wie k-nearest neighbour- oder support vector machine-Algorithmen.

Elektronische Heizkostenverteiler nach der DIN EN 834 sind registrierende Messgeräte für die über die Zeit integrierte Temperatur. Die Temperatur dient zur Bestimmung der Wärmeabgabe der Raumheizflächen, an denen die Heizkostenverteiler oder ihre Sensoren montiert sind. Ein vom elektronischen Heizkostenverteiler angezeigte Verbrauchswert wird aus dem unbewerteten Anzeigewert durch Multiplikation mit Bewertungsfaktoren, insbesondere für die Referenz-Wärmeleistung der Raumheizfläche (KQ) und für den Wärmekontakt zwischen den Sensoren und den zu erfassenden Temperaturen (KC)gewonnen. Der Gesamtbewertungsfaktor KGes ist das Produkt der Einzelnen Bewertungsfaktoren. Der c-Wert gemäß DIN EN 834 ist ein Maß für den Grad der thermischen Ankopplung der Temperatursensoren an die zu erfassenden Temperatur. (Quelle: DIN EN 834: 2017 Kap. 4)

Ein weiterer erheblicher technischer Vorteil des erfinderischen Verfahrens und eines Systems mit Verwendung des beschriebenen dynamischen Raumtemperaturmodells besteht darin, diese auch im Kontext der bislang weitgehend aus Erfahrungswerten bestimmten Korrekturfaktoren / Bewertungsfaktoren in den Heizkostenverteilern zu verwenden.

Hierzu wird vorteilhafterweise ein Korrekturfaktor, insbesondere ein raumluftseitiger Korrekturfaktor (KCL) des im ersten Raum angeordneten Heizkostenverteilers unter Verwendung des dynamischen Raumtemperaturmodells bestimmt und die Raumtemperatur dann anhand des bestimmten Korrekturfaktors ermittelt. Die in den elektronischen Heizkostenverteilern hinterlegten typisch stationären Korrekturfaktoren, beispielsweise $K_{Ges}$ und $K_{CL}$, können somit auf Basis des dynamischen Raumtemperaturmodells geschätzt werden. Dies kann in einfacher Weise aus den gemessenen und übermittelten Werten des Wärmeverbrauchs, des Wärmeinkrements und/oder Rohtemperaturen $\vartheta_{HKS}$, $\vartheta_{RLS}$ erfolgen.

Weiterhin eröffnet eine derartige Ermittlung die Möglichkeit, vorteilhafterweise einen Korrekturfaktor, insbesondere einen raumluftseitigen Korrekturfaktor $K_{CL}$ des im ersten Raum angeordneten Heizkostenverteilers unter Verwendung des dynamischen Raumtemperaturmodells zeitlich dynamisch zu verändern. Ein solcher dynamischer Korrekturfaktor kann für eine verbesserte Schätzung der Raumtemperatur verwendet werden, wobei eine solche dynamische Korrektur bzw. genaue Ermittlung der Raumtemperatur respektive der Korrekturfaktoren gerade im Kontext der eingangs beschriebenen Beeinflussung der Nutzerverhaltens im Sinne der Energieverbrauchreduzierung eine hohe Bedeutung zukommt.

Weiterhin wird vorteilhafterweise ein Korrekturfaktor $K_{Ges}$ oder $K_{CL}$ des im ersten Raum angeordneten Heizkostenverteilers unter Verwendung des dynamischen Raumtemperaturmodells auf Plausibilität überprüft. Dies kann erfolgen, indem die mittels des Modells ermittelten Korrekturfakturen mit Sollwerten und deren Toleranzbereichen verglichen werden und unzulässige Abweichungen erkannt und gemeldet werden. Vorteilhafterweise wird also unter Verwendung des dynamischen Raumtemperaturmodells der ermittelte Korrekturfaktor mit vorgegebenen Minimal- und/oder Maximalwerten verglichen.

Das beschriebene Verfahren bietet die Möglichkeit, das Training des Raumtemperaturmodells völlig asynchron zur Anwendung des Raumtemperaturmodells für die Schätzung der Raumtemperatur einzusetzen. Der vorab trainierte Parametersatz wird dazu vorteilhafterweise auf einem nichtflüchtigen Speicher des in dem ersten Raum angeordneten elektronischen Heizkostenverteilers gespeichert und dient dort lokal der Ermittlung der Raumtemperatur, die ggf. auch direkt am Heizkostenverteiler mittels eines entsprechenden Displays angezeigt werden kann.

Die Aufgabe wird ferner gelöst durch ein System zur Ermittlung der Raumtemperatur in einem ersten Raum eines ersten Gebäudes, umfassend einen, mit einem in dem ersten Raum angeordneten kommunikationsfähigen elektronischen Heizkostenverteiler verbundenen, Dateneingang, einen Datenspeicher in dem das dynamischen Raumtemperaturmodell abgelegt ist, welches vorab aus Trainingsdaten einer Vielzahl von zweiten Räumen im ersten oder in zweiten Gebäuden erzeugt wurde, wobei die Trainingsdaten die an in den zweiten Räumen angeordneten kommunikationsfähigen elektronischen Heizkostenverteilern gemessene zweiten raumluftseitige Temperaturen, zweiten heizkörperseitige Temperaturen und in den zweiten Räumen gemessene Raumtemperaturen enthalten, das ausgebildet ist zum Ausführen des erfindungsgemäßen Verfahrens.

Die mit der Erfindung erzielten Vorteile bestehen insbesondere darin, dass eine besonders exakte Bestimmung der Raumtemperatur aus den Rohtemperaturen des Funk-Heizkostenverteilers $\vartheta_{HKS}$, $\vartheta_{RLS}$ und der Temperaturdifferenz $\Delta\vartheta_{FHKV} = \vartheta_{HKS} - \vartheta_{RLS}$ mit Hilfe eines dynamischen Raumtemperaturmodells ermöglicht wird. Die gesuchte Raumtemperatur lässt sich dabei für beheizte und nicht beheizte Zeiträume differenziert ermitteln. Das dynamische Raumtemperaturmodell wird dabei aus Trainingsdaten von zweiten Räumen in Nutzeinheiten erzeugt, die sowohl mit kommunikativen elektronischen Heizkostenverteilern (Funk-Heizkostenverteilern) als auch mit kommunikativen Raumtemperatursensoren zur von den Heizkostenverteilern unabhängigen Messung der Raumtemperatur ausgestattet sind.

Diese genaue Ermittlung der Raumtemperatur bietet besondere Vorteile im Rahmen der Zielen der eingangs beschriebenen EED 2018 (European Efficiency Directive), da hier den maßgeblichen zu übertragenden Messwerten, nämlich dem Wärmeverbrauch und der Raumtemperatur in den Wohnungen eine hohe Bedeutung zukommt.

Generell kann das dynamische Raumtemperaturmodell entweder in Form von Edge-Computing auf einem Gateway oder auch auf einem Datensammler im Gebäude oder auch in Form von Cloud-Computing in IT-Backend- oder Cloud-Systemen implementiert werden. Die Berechnungsergebnisse des Verfahrens zur Ermittlung der Raumtemperatur mit einem dynamischen Raumtemperatur-Modell können an eine Auswerteeinheit/Meldezentrale, insbesondere an ein zentrales IT-System oder eine Daten-Cloud eines Dienstleisters, übermittelt werden, um energetische und statistische Analysen durchzuführen.

Die Berechnungsergebnisse des Verfahrens zur Ermittlung der Raumtemperatur mit einem dynamischen Raumtemperatur-Modell können zur Ermittlung der Korrekturfaktoren der elektronischen Heizkostenverteiler und deren Plausibilitätsprüfung an die Auswerteeinheit/Meldezentrale, insbesondere an ein zentrales IT-System oder eine Daten-Cloud eines Dienstleisters, übermittelt werden, um eine nicht korrekte Kodierung von Funk-Heizkostenverteilern automatisiert zu erkennen, zu protokollieren und an die für die Korrektur zuständige Organisationseinheiten, insbesondere die Montageorganisation, eines Dienstleisters zu melden.

Ausführungsbeispiele der Erfindung werden anhand von Zeichnungen näher erläutert. Darin zeigen

FIG 1    ein Ablaufschema und einen Datenflussplan des dynamischen Raumtemperaturmodells;
FIG 2    eine Detailansicht der Messstrecke aus FIG 1;

FIG 3    eine Detailansicht der Felddatenerfassung aus FIG 1;

FIG 4    eine beispielhafte Verteilung der Temperaturabweichung ($\vartheta_{RTS}$ - $\vartheta_{RLS}$), also der Differenzwerte der Messwerten des Raumtemperatursensors $\vartheta_{RTS}$ und des raumluftseitigen Temperatursensors des Funk-Heizkostenverteilers $\vartheta_{RLS}$ eines Trainingsdatensatzes für den Fall eines eingeschalteten Heizkörpers;

FIG 5    eine beispielhafte Verteilung der Temperaturabweichung ($\vartheta_{RTS}$ - $\vartheta_{RLS}$), also der Differenzwerte der Messwerten des Raumtemperatursensors $\vartheta_{RTS}$ und des raumluftseitigen Temperatursensors des Funk-Heizkostenverteilers $\vartheta_{RLS}$ eines Trainingsdatensatzes für den Fall eines ausgeschalteten Heizkörpers;

FIG 6    eine Verteilung der in den Heizkostenverteilern hinterlegten $K_{CL}$-Werten (links - a) und den dynamisch gemessenen/berechneten $K_{CL}$ Werte (rechts - b) für Trainings- und Messdaten aus den Räumen der Nutzeinheiten in den Gebäuden (Felddaten);

FIG 7    eine beispielhafte Verteilung nach Anwendung des trainierten Raumtemperatur-Modelles auf Felddaten in Mehrfamilienhäusern für den Fall eines eingeschalteten Heizkörpers; und

FIG 8    eine beispielhafte Verteilung nach Anwendung des trainierten Raumtemperatur-Modelles auf Felddaten in Mehrfamilienhäusern für den Fall eines ausgeschalteten Heizkörpers.

Die Temperaturmesswerte oder die Temperaturdifferenzwerte der in den Gebäuden in den Nutzeinheiten installierten kommunikationsfähigen elektronischen Heizkostenverteilern, insbesondere den fernablesbaren Funkheizkostenverteiler, werden in die IT-Systeme (Zentrale Server, Leitstand, Cloud-Systeme) übertragen und im Folgenden als Felddaten bezeichnet.

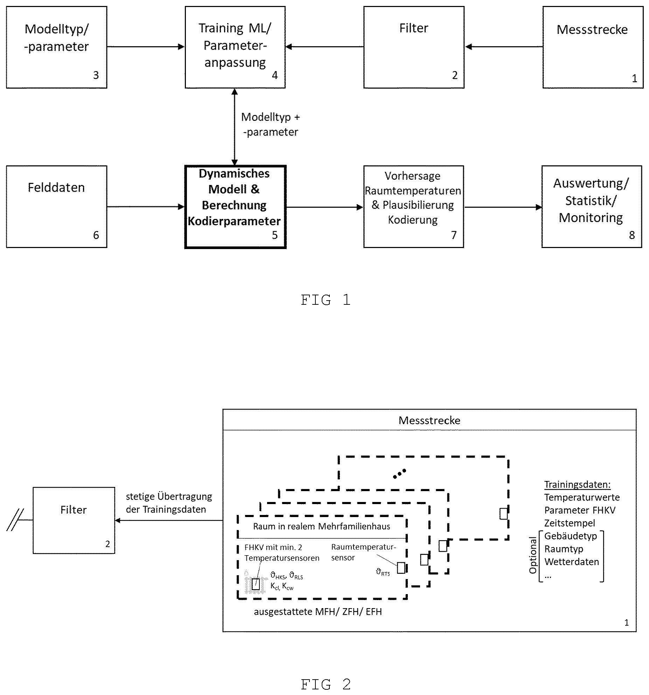

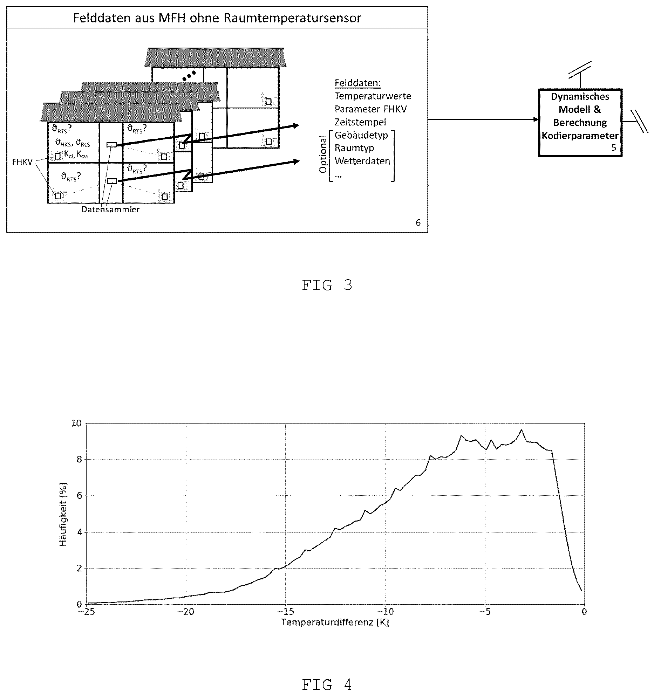

FIG 1 sowie im Detail FIG 2 und FIG 3 zeigen den prinzipiellen Ablaufplan und Datenflussplan des Verfahrens zur Ermittlung der Raumtemperatur mit einem dynamischen Raumtemperaturmodell(Modell). Hierbei wird zunächst eine Messstrecke 1 festgelegt. Als Messstrecke 1 wird hierbei die Anordnung kommunikativer, elektronischer Heizkostenverteiler, insbesondere Funk-Heizkostenverteiler und kommunikativer Raumtemperatursensoren zur Messung der Raumtemperatur verstanden, die in zumindest einem Raum eines Gebäudes, vorzugsweise in mehreren Räumen und Gebäuden angeordnet sind. Die an ein zentrales IT-System (fern-) übertragenen Messwerte dieser elektronischen Funk-Heizkostenverteiler und Raumtemperatursensoren bilden die Datenbasis für die Trainingsdaten. In Ausführungsbeispielen enthalten die Trainingsdaten zusätzlich weitere meteorologische, physikalische oder bau- oder anlagentechnische Größen oder weitere Kenngrößen oder Messgrößen der Räume/Gebäude der Messstrecke 1.

Die Trainingsdaten werden in einem Filter 2 vorselektiert, der geeignete Merkmale zur Klassifizierung der Trainingsdaten ermittelt. Mit den gefilterten (vorselektierten) Trainingsdaten wird sodann das Modell 3 dynamisch trainiert 4. Dies kann in einem ersten Schritt auf Basis von in den IT-Systemen (Datenbanken) vorhandener historischer Daten (Vergangenheitswerten) erfolgen, in den weiteren Ausführungsbeispielen wird das Modell 3 jedoch kontinuierlich mit stetiger Übertragung (Fernablesung) weiterer neu erfasster Trainingsdaten aus der Messstrecke 1 weitertrainiert.

Das Modell 3 zur Ermittlung der geschätzten Raumtemperatur $\hat{\vartheta}_{RL}$ enthält einen zu ermittelnden und ständig zu optimierenden freien Parametersatz P sowie die Trainingsdaten 1, d.h. Roh-Temperaturwerte $\vartheta_{RLS}$ , $\vartheta_{HKS}$ der Funk-Heizkostenverteiler und optional weitere meteorologische, physikalische oder bau- oder anlagentechnische Größen (hier dargestellt als Merkmalsvektor M):

$$\hat{\vartheta}_{RL}(P, \vartheta_{RLS}, \vartheta_{HKS}, M)\,.$$

Der Merkmalsvektor M kann beispielsweise folgende Kenngrößen oder Messgrößen enthalten:

-    Gebäudealter (Baujahr)
-    Gebäudekompaktheit
-    Raumtyp
-    spezifischer Raumheizwärmeverbrauchswert [kWh/m^2*K] oder Baualtersklasse
-    Außentemperatur
-    Vorlauftemperatur des Heizmediums
-    Rücklauftemperatur des Heizmediums
-    Heizkörpertyp
-    Solarstrahlung (Sonneneinstrahlung)
-    Windgeschwindigkeit
-    Lagefaktor der Nutzeinheit oder eines Raums.

Der freie Parametervektor P wird so optimieren, dass die quadratische oder einfache Differenz

$$\Delta = \left[ \hat{\vartheta}_{RL}(P, \vartheta_{RLS}, \vartheta_{HKS}, M) - \vartheta_{RTS} \right] \rightarrow min(P(M))$$

$$\Delta^2 = \left[ \hat{\vartheta}_{RL}(P, \vartheta_{RLS}, \vartheta_{HKS}, M) - \vartheta_{RTS} \right]^2 \rightarrow min(P(M))$$

mit

$\hat{\vartheta}_{RL}$: geschätzte Raumlufttemperatur (Berechnungsgröße)
$\vartheta_{RTS}$: Messwert des Raumlufttemperatursensors (Messgröße)
$\vartheta_{RLS}$: Messwert des raumluftseitigen Sensors des FHKV (Messgröße)
$\vartheta_{HKS}$: Messwert des heizkörperseitigen Sensors des FHKV (Messgröße)

minimiert wird. Dabei kann der optimierende Parametervektor P nach meteorologischen, physikalischen oder bau- oder anlagentechnischen Größen (Merkmalsvektor M) klassifiziert werden, was mittels P(M) illustriert wird.

Besonders vorteilhafte Ausführungsbeispiele ergeben sich, wenn zur Ermittlung der geschätzten Raumtemperatur $\hat{\vartheta}_{RL}$ ein betriebspunktabhängiger und parametrisch optimierter Korrekturfaktor $K_{CL,op}$ ermittelt wird, welcher eine betriebspunktabhängige Beziehung zwischen der zu ermittelten Raumlufttemperatur und den gemessenen Rohtemperaturen des Heizkostenverteilers herstellt.

Dies erfolgt mit der Form:

$$\hat{\vartheta}_{RL}(P, \vartheta_{RLS}, \vartheta_{HKS}, M) = \hat{\vartheta}_{RL}\left(K_{CL,op}(P), \vartheta_{RLS}, \vartheta_{HKS}, M\right).$$

Die Ermittlung der Raumlufttemperatur erfolgt mit :

$$\hat{\vartheta}_{RL} = \vartheta_{HKS} - K_{CL,op}(P(M), \Delta\vartheta_{FHKV}) \cdot \Delta\vartheta_{FHKV}$$

mit

P     abhängig von dem Merkmalsvektor M, bestimmter Parametervektor,;

$$\Delta\vartheta_{FHKV} = \vartheta_{HKS} - \vartheta_{RLS}$$

und

$\hat{\vartheta}_{RL}$: geschätzte Raumtemperatur in der Umgebung des elektronischen Funk-Heizkostenverteilers oder in der Wohnung als Zielgröße
$\vartheta_{HKS}$: Heizkörperoberflächentemperatur bzw. heizkörperseitige Temperatur des elektronischen Funk-Heizkostenverteilers als Messgröße
$K_{CL,op}(P)$: ständig zu optimierender dynamischer Korrekturfaktor
$\vartheta_{RLS}$: raumluftseitige Temperatur des elektronischen Funk-Heizkostenverteilers (Messgröße)

Dabei wird der betriebspunktabhängige Korrekturfaktor $K_{CL,op}$ modelliert entweder als

- Polynombasiertes Modell
- KI-Modell auf Basis von trainierten neuronalen multiLayer-Netzen
- KI-Modell auf Basis von trainierten Entscheidungsbäumen (decision trees) oder Ensemble-Methoden wie etwa Random Forest, Gradient Tree Boosting
- KI-Modell auf Basis von k nearest neighbour- oder support vector-Verfahren

Ein Beispiel für ein Polynombasiertes Modell für den trainierten dynamischen Korrekturfaktor ist

$$K_{CL,op} = p_0 + \sum_{j=1}^{3} p_j \cdot \Delta_{FHKV}{}^j,$$

wobei die Parameter des Parametervektors P abhängig sein können von einzelnen Parametern des Merkmalsvektors M.

In einzelnen Ausführungsformen wird dabei der Einfluss der Vorlauftemperatur $\vartheta_{VL,HK}$ (als Messwert, als Mittelwert, als Schätzwert) wie folgt berücksichtigt, wobei die Begrenzung auf die dritte Ordnung ist nicht zwingend ist:

$$p_j = p_{j,0} + \sum_{k=1}^{3} p_{j,k} \cdot \vartheta_{VL,HK}{}^{k} \quad \text{für } j = 0, \ldots, 3$$

Die freien Parameter $p_{j,0}$ und $p_{j,k}$ des Parametervektors P können hierbei in einzelnen Ausführungsbeispielen mit Hilfe einer Ordinary-Least-Square-Methode auf Basis der Messdaten für Vorlauftemperatur (oder andere Umgebungswerte) und der Funk-Heizkostenverteiler Rohtemperaturwerte geschätzt werden.

In einer anderen Ausführungsformen des Modells für den trainierten dynamischen Korrekturfaktor wird ein KI-Modell auf Basis von trainierten Entscheidungsbäumen verwendet, z.B.:

$$K_{CL,op} = \sum_{j=1}^{J} s_j \cdot T_j \left( P, \vartheta_{RLS}, \vartheta_{HKS}, M \right)$$

Jeder Entscheidungsbaum teilt dabei den Datensatz an Entscheidungsknoten durch eine logische Regel (z. B. Wert kleiner x) solange bis ein Blattknoten erreicht und eine Vorhersage getroffen wird. Durch die Addition von einfachen Entscheidungsbaum-Modellen $T_j(P,M)$ wird ein Gesamtmodell, das auch komplexe Probleme lösen kann, aufgebaut. Jeder zusätzliche hinzugefügte Entscheidungsbaum versucht dabei, die Verlustfunktion der vorherigen Funktion $F_{j-1}$ zu minimieren mit

$T_j(P,\vartheta_{RLS},\vartheta_{HKS},M)$:    Weak learner, z. B. Entscheidungsbaum, der durch die gesuchten Parameter P definiert wird. D.h. P definiert die Anzahl der Knoten und Blätter, sowie die Regelausdrücke an den Knoten.

$s_j$:    Schrittweite auf der Verlustfunktion

In Ausführungsbeispielen werden die in den Geräten gespeicherten $K_{CL}$-Werte mit in das KI-Modell gegeben.

Die Ermittlung der Raumlufttemperatur 7 kann nun mit Hilfe des trainierten Modells 5 für $K_{CL,op}$ aus Daten (Messwerten) 6 von Räumen, die nicht mit einem separaten

Raumlufttemperatursensor, sondern nur mit einem kommunikativen elektronischen Heizkostenverteiler ausgestattet sind, erfolgen:

$$\hat{\vartheta}_{RL} = \vartheta_{HKS} - K_{CL,\mathrm{op}}(\varDelta_{EHKV}, P, M) \cdot \varDelta_{FHKV}$$

mit

$\hat{\vartheta}_{RL}$:    geschätzte Raumtemperatur in der Umgebung des elektronischen Funk-Heizkostenverteilers oder in der Wohnung

$K_{CL,\mathrm{op}}$:    trainierter dynamischer Korrekturfaktor.

Neben der Ermittlung der Raumtemperatur 7 mit dem dynamischen Raumtemperaturmodells kann die Plausibilität der im elektronischen Heizkostenverteiler hinterlegten stationären Korrekturfaktoren ermittelt werden. Zu diesem Zweck werden im ersten Schritt die im elektronischen Heizkostenverteiler hinterlegten stationären Korrekturfaktoren im trainierten

Modell 5 geschätzt, z.B. der stationäre Korrekturfaktors $K_{CL}$:

$$K_{CL} = \frac{\vartheta_{HKS} - \hat{\vartheta}_{RL}}{\Delta\vartheta_{FHKV}}$$

mit

$\hat{\vartheta}_{RL}$:    im Raum mit dem unabhängig vom elektronischen Heizkostenverteiler betriebenen kommunikationsfähigen Raumsensor gemessene oder die mittels $K_{CL,\mathrm{op}}$ nach dem erfindungsgemäßen Verfahren berechnete Raumtemperatur.

Die Ermittlung des stationären, im Heizkostenverteiler hinterlegten Korrekturfaktors $K_{Ges}$ kann dabei in Ausführungsbeispielen wie folgt erfolgen:

Aus der Beziehung

$$\bar{Q} = \dot{Q}_N \cdot \left( \frac{\overline{K}_{Ges} \cdot \overline{\Delta}_{FHKV}}{\Delta_{Log,N}} \right)^n$$

folgt nach einigen Umstellungen

$$\overline{K}_{Ges} \;=\; \left( \frac{\Delta_{Log,N}}{\overline{\Delta}_{FHKV}} \right) \cdot exp \left[ \frac{1}{n} \cdot ln \left( \frac{\bar{Q}}{\dot{Q}_N} \right) \right]$$

mit

$n$     der im elektronischen Funk-Heizkostenverteiler hinterlegte Heizkörperexponent (z.B. 1,1 oder auch 1,3)

$\Delta_{Log,N}$     die berechnete logarithmische Übertemperatur (90,70,20) °C ($\approx$ 59,44 K)

$\dot{Q}_N$     die im elektronischen Funk-Heizkörper hinterlegte Heizkörperleistung in Watt ($K_Q$)

$\bar{Q} = \frac{\Delta Q}{\Delta t}$   die über $\Delta t$ gemittelte Heizkörperleistung

$\overline{\Delta}_{fHKV}$     Über $\Delta t$ gemittelte Rohtemperaturdifferenz des elektronischen Funk-Heizkostenverteilers.

Die Ermittlung des stationären, im Funk-Heizkostenverteiler hinterlegten Korrekturfaktors Kcw erfolgt schließlich über

$$\widehat{\overline{K}}_{CW} = \frac{\widehat{\overline{K}}_{Ges}}{\widehat{K}_{CL}}.$$

Die Plausibilität der mit dem erfindungsgemäßen Verfahren geschätzten Korrekturwerte kann nun sehr einfach durch Vergleich mit definierten zulässigen Max- und Min-Werten erfolgen. Schließlich kann eine detaillierte Auswertung/-Statistik sowie ein Monitoring erfolgen 8.

In besonders vorteilhaften Ausführungsformen werden für die vorstehend aufgeführten Korrekturfaktoren jeweils Zeitreihen gebildet und die Plausibilisierungschecks werden anhand der Zeitreihenanalysen durchgeführt.

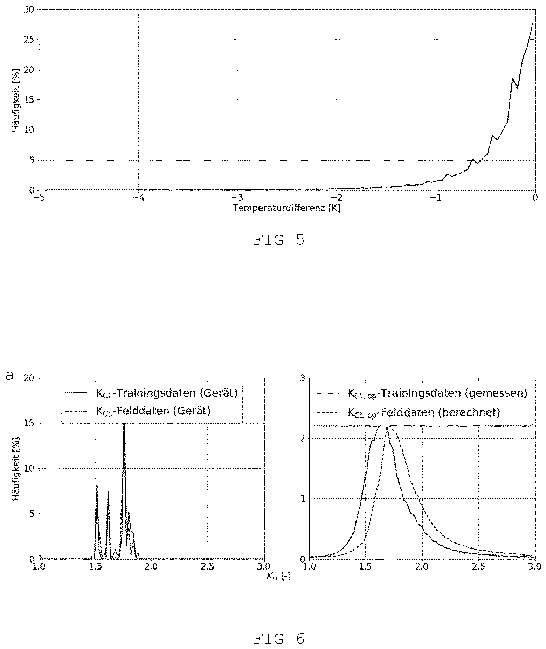

Die FIG 4 und FIG 5 zeigen Daten eines beispielhaften Trainingsdatensatzes.

FIG 4 zeigt eine beispielhafte Verteilung der Temperaturabweichung ($\vartheta_{RTS} - \vartheta_{RLS}$)des Messwerts des raumluftseitigen Temperatursensors des am Heizkörper angeordneten FHKV ($\vartheta_{RLS}$) zum Messwert des geeignet im Raum angeordneten Raumtemperatursensors ($\vartheta_{RTS}$) eines Trainingsdatensatzes für den Fall eines eingeschalteten, also vom Heizmedium durchflossenen und Wärme abgebenden Heizkörpers.

FIG 5 zeigt eine beispielhafte Verteilung der Temperaturabweichung ($\vartheta_{RTS} - \vartheta_{RLS}$)eines Trainingsdatensatzes für den Fall eines ausgeschalteten Heizkörpers, wobei jeweils die Häufigkeit aufgetragen ist gegen die Temperaturdifferenz.

Die FIG 6 bis FIG 8 zeigen schließlich Ergebnisse aus der Verwendung dieser Trainingsdaten zum Training eines beschriebenen dynamischen Raumtemperatur-Modells. Hierbei zeigt FIG 6 eine Verteilung der in den Heizkostenverteilern hinterlegten $K_{CL}$-Werte (links - a) und der dynamisch gemessenen/berechneten $K_{CL}$-Werte (rechts - b) für Trainingsdaten und gemessene Felddaten. Die dargestellten Abweichungen zeigen den Erfolg der beschriebenen Verfahren.

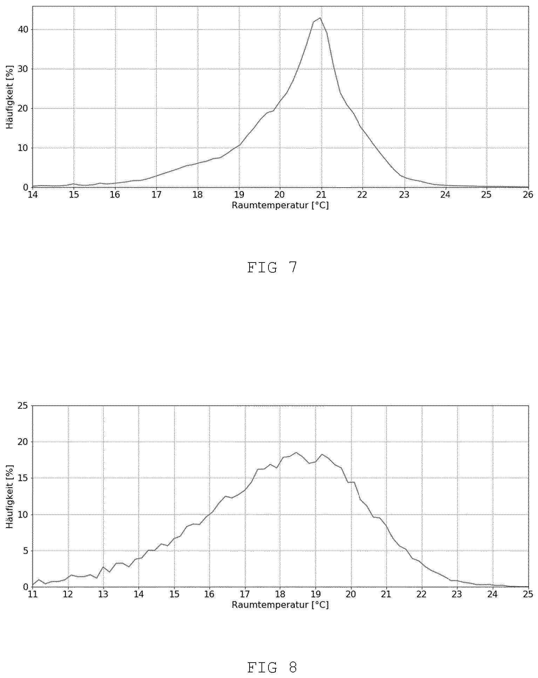

FIG 7 zeigt eine beispielhafte Verteilung nach Anwendung des trainierten Raumtemperaturmodelles auf gemessene Daten in Mehrfamilienhäusern für den Fall eines eingeschalteten Heizkörpers; und FIG 8 zeigt eine beispielhafte Verteilung nach Anwendung des trainierten dynamischen Raumtemperatur-Modelles auf die Felddaten in Mehrfamilienhäusern für den Fall eines ausgeschalteten Heizkörpers.

## Patentansprüche

1. Verfahren zur Ermittlung der Raumtemperatur in einem ersten Raum eines ersten Gebäudes, bei dem aus zumindest einer ersten raumluftseitigen Temperatur und einer ersten heizkörperseitigen Temperatur, die von einem in dem ersten Raum angeordneten elektronischen kommunikationsfähigen Heizkostenverteiler, insbesondere Funk-Heizkostenverteiler, gemessen werden, und einem trainierten Parametersatz eines dynamischen Raumtemperaturmodells (5) eine Raumtemperatur des ersten Raumes ermittelt wird,
wobei der Parametersatz des dynamischen Raumtemperaturmodells (5) vorab aus Trainingsdaten einer Vielzahl von zweiten Räumen im ersten oder in zweiten Gebäuden erzeugt wurde, wobei die Trainingsdaten an in den zweiten Räumen angeordneten elektronischen kommunikationsfähigen Heizkostenverteilern, insbesondere Funk-Heizkostenverteilern, gemessene zweite raumluftseitige Temperaturen, zweite heizkörperseitige Temperaturen und in den zweiten Räumen separat gemessene Raumtemperaturen enthalten.

2. Verfahren nach dem vorhergehenden Anspruch, wobei die Raumtemperatur weiterhin anhand einer Anzahl von vorab ermittelten Kenngrößen und/oder zusätzlichen Messgrößen des ersten Raumes und/oder des ersten Gebäudes ermittelt wird, und wobei die Trainingsdaten die jeweils entsprechenden Kenngrößen und/oder Messgrößen der zweiten Räume und/oder der zweiten Gebäude enthalten.

3. Verfahren nach einem der vorhergehenden Ansprüche, wobei die Kenngrößen des Raumes und/oder des Gebäudes ein oder mehrere der folgenden umfassen:

   - ein Gebäudetyp;
   - ein Gebäudealter;
   - ein Maß für Kompaktheit des Gebäudes;
   - eine energetische Klassifizierung des Gebäudes;
   - ein Raumtyp;
   - eine Raumgröße;
   - ein Heizkörpertyp.

4. Verfahren nach einem der vorhergehenden Ansprüche, wobei die zusätzlichen Messgrößen des Raumes und/oder des Gebäudes ein oder mehrere der folgenden umfassen:

   - eine Außentemperatur;
   - eine Vorlauftemperatur eines Heizmediums;
   - eine Rücklauftemperatur eines Heizmediums;
   - eine Sonneneinstrahlung;
   - eine Windrichtung und/oder Windgeschwindigkeit.

5. Verfahren nach einem der vorhergehenden Ansprüche, bei dem die Trainingsdaten in dynamische und quasistationäre Zustände klassifiziert wurden und das dynamische Raumtemperatur-Modell (5) ausschließlich aus den als quasistationäre Zustände klassifizierten Trainingsdaten erzeugt wurde.

6. Verfahren nach einem der vorhergehenden Ansprüche, bei dem das dynamische Raumtemperatur-Modell eines der folgenden datengetriebenen Modelle (5) ist:

   - ein Polynombasiertes Modell;
   - ein Künstliche-Intelligenz-Modell auf Basis von trainierten neuronalen Netzen;
   - ein Künstliche-Intelligenz-Modell auf Basis von trainierten Entscheidungsbäumen;
   - ein Künstliche-Intelligenz-Modell auf Basis maschineller Lernverfahren.

7. Verfahren nach einem der vorhergehenden Ansprüche, bei dem ein Korrekturfaktor, insbesondere ein raumluftseitiger Korrekturfaktor des im ersten Raum angeordneten elektronischen Funk-Heizkostenverteilers unter Verwendung des dynamischen Raumtemperatur-Modells (5) bestimmt wird und die Raumtemperatur weiterhin anhand des bestimmten Korrekturfaktors ermittelt wird.

8. Verfahren nach einem der vorhergehenden Ansprüche, bei dem ein Korrekturfaktor, insbesondere ein raumluftseitiger Korrekturfaktor des im ersten Raum angeordneten elektronischen kommunikationsfähigen Heizkostenverteilers, insbesondere eines Funk-Heizkostenverteilers, unter Verwendung des dynamischen Raumtemperaturmodells (5) zeitlich dynamisch verändert wird.

9. Verfahren nach einem der vorhergehenden Ansprüche, bei dem ein Korrekturfaktor des im ersten Raum angeordneten elektronischen kommunikationsfähigen Heizkostenverteilers, insbesondere eines Funk-Heizkostenverteilers, unter Verwendung des dynamischen Raumtemperaturmodells (5) auf Plausibilität überprüft wird.

10. Verfahren nach dem vorhergehenden Anspruch, bei dem der unter Verwendung des dynamischen Raumtemperaturmodells (5) ermittelte Korrekturfaktor mit vorgegebenen Minimal- und/oder Maximalwerten verglichen wird.

11. Verfahren nach einem der vorhergehenden Ansprüche, bei dem der trainierte Parametersatz auf einem nichtflüchtigen Speicher des in dem ersten Raum angeordneten elektronischen kommunikationsfähigen Heizkostenverteilers, insbesondere eines Funk-Heizkostenverteilers, gespeichert wird.

12. System zur Ermittlung der Raumtemperatur in einem ersten Raum eines ersten Gebäudes, umfassend einen mit einem in dem ersten Raum angeordneten elektronischen kommunikationsfähigen Heizkostenverteiler, insbesondere einem Funk-Heizkostenverteiler, verbundenen Dateneingang, einen Datenspeicher mit einem in dem Datenspeicher abgelegten dynamischen Raumtemperatur-Modell (5), das vorab aus Trainingsdaten einer Vielzahl von zweiten Räumen im ersten oder in zweiten Gebäuden erzeugt wurde, wobei die Trainingsdaten an in den zweiten Räumen angeordneten elektronischen Heizkostenverteilern, insbesondere Funk-Heizkostenverteilern, gemessene zweite raumluftseitige Temperaturen, zweite heizkörperseitige Temperaturen und in den zweiten Räumen gemessene Raumtemperaturen enthalten, ausgebildet zum Ausführen des Verfahrens nach einem der vorhergehenden Ansprüche.

**Claims**

1. A method for determining room temperature in a first room of a first building, in which

a room temperature of the first room is determined from at least a first room-air-side temperature and a first radiator-side temperature, which are measured by an electronic communication-capable heat cost allocator, in particular a radio heat cost allocator, arranged in the first room, and a trained parameter set of a dynamic room temperature model (5),
wherein the parameter set of the dynamic room temperature model (5) was generated in advance from training data of a plurality of second rooms in the first or in second buildings, wherein the training data contain second room air-side temperatures, second radiator-side temperatures and room temperatures measured separately in the second rooms, measured at electronic communication-capable heat cost allocators, in particular radio heat cost allocators, arranged in the second rooms.

2. The method according to the preceding claim, wherein the room temperature is further determined using a number of previously determined characteristic variables and/or additional measured variables of the first room and/or the first building, and wherein the training data contain the respective corresponding characteristic variables and/or measured variables of the second rooms and/or the second buildings .

3. The method according to any one of the preceding claims, wherein the characteristic variables of the room and/or the building comprise one or more of the following:

- a building type;
- a building age;
- a measure of compactness of the building;
- an energy classification of the building;
- a room type;
- a room size;
- a radiator type.

4. The method according to any one of the preceding claims, wherein the additional measured variables of the room and/or the building comprise one or more of the following:

- an outdoor temperature;
- a flow temperature of a heating medium;
- a return temperature of a heating medium;
- a solar radiation;
- a wind direction and/or wind speed.

5. The method according to one of the preceding claims, wherein the training data have been classified into dynamic and quasi-stationary states and the dynamic room temperature model (5) has been generated exclusively from the training data classified as quasi-stationary states.

6. The method according to any one of the preceding claims, wherein the dynamic room temperature model is one of the following data-driven models (5):

   - a polynomial-based model;
   - an artificial intelligence model based on trained neural networks;
   - an artificial intelligence model based on trained decision trees;
   - an artificial intelligence model based on machine learning methods.

7. The method according to one of the preceding claims, in which a correction factor, in particular a correction factor on the room air side of the electronic radio heat cost allocator arranged in the first room, is determined using the dynamic room temperature model (5) and the room temperature is furthermore determined using the determined correction factor.

8. The method according to one of the preceding claims, in which a correction factor, in particular a room air-side correction factor of the electronic communication-capable heat cost allocator arranged in the first room, in particular a radio heat cost allocator, is dynamically changed over time using the dynamic room temperature model (5).

9. The method according to one of the preceding claims, in which a correction factor of the electronic communication-capable heat cost allocator arranged in the first room, in particular a radio heat cost allocator, is checked for plausibility using the dynamic room temperature model (5).

10. The method according to the preceding claim, in which the correction factor determined using the dynamic room temperature model (5) is compared with predetermined minimum and/or maximum values.

11. The method according to one of the preceding claims, in which the trained parameter set is stored on a nonvolatile memory of the electronic communication-capable heat cost allocator, in particular a radio heat cost allocator, arranged in the first room.

12. System for determining room temperature in a first room of a first building, comprising a data input connected to an electronic communication-capable heat cost allocator, in particular a radio heat cost allocator, arranged in the first room, a data memory with a dynamic room temperature model (5) stored in the data memory, which has been generated in advance from training data of a plurality of second rooms in the first or in second buildings, the training data containing second room-air-side temperatures measured at electronic heat cost allocators arranged in the second rooms, in particular radio heat cost allocators, second radiator-side temperatures and room temperatures measured in the second rooms, designed for carrying out the method according to one of the preceding claims.

**Revendications**

1. Un procédé de détermination de la température ambiante dans une première pièce d'un premier bâtiment, dans lequel

   la température ambiante de la première pièce est déterminée à partir d'au moins une première température côté air ambiant et d'une première température côté radiateur, qui sont mesurées par un répartiteur de frais de chauffage à communication électronique, en particulier un répartiteur de frais de chauffage radio, placé dans la première pièce, et d'un ensemble de paramètres entraînés d'un modèle dynamique de température ambiante (5), dans lequel le jeu de paramètres du modèle dynamique de température ambiante (5) a été généré à l'avance à partir des données d'entraînement d'une pluralité de secondes pièces dans le premier ou le second bâtiment, dans lequel les données d'entraînement contiennent les températures côté air de la seconde pièce, les températures côté radiateur de la seconde pièce et les températures ambiantes mesurées séparément dans les secondes pièces, mesurées par des répartiteurs de frais de chauffage à capacité de communication électronique, en particulier des répartiteurs de frais de chauffage par radio, disposés dans les secondes pièces.

2. Le procédé selon la revendication précédente, dans lequel la température ambiante est en outre déterminée à l'aide d'un certain nombre de variables caractéristiques déterminées précédemment et/ou de variables mesurées supplémentaires de la première pièce et/ou du premier bâtiment, et dans laquelle les données d'apprentissage contiennent les variables caractéristiques et/ou les variables mesurées correspondantes des deuxièmes pièces et/ou des deuxièmes bâtiments .

3. Le procédé selon l'une des revendications précédentes, dans lequel les variables caractéristiques de la pièce et/ou du bâtiment comprennent un ou plusieurs des éléments suivants :

- un type de bâtiment
- l'âge du bâtiment
- une mesure de la compacité du bâtiment ;
- une classification énergétique du bâtiment ;
- un type de pièce ;
- la taille de la pièce ;
- un type de radiateur.

4. Le procédé selon l'une des revendications précédentes, dans lequel les variables mesurées supplémentaires de la pièce et/ou du bâtiment comprennent un ou plusieurs des éléments suivants :

- la température extérieure
- température de départ d'un fluide de chauffage
- température de retour d'un fluide chauffant ;
- un rayonnement solaire ;
- la direction et/ou la vitesse du vent.

5. Le procédé selon l'une des revendications précédentes, dans lequel les données d'apprentissage ont été classées en états dynamiques et quasi-stationnaires et le modèle dynamique de température ambiante (5) a été généré exclusivement à partir des données d'apprentissage classées en états quasi-stationnaires.

6. Le procédé selon l'une quelconque des revendications précédentes, dans lequel le modèle dynamique de température ambiante est l'un des modèles basés sur des données suivants (5) :

- un modèle basé sur des polynômes ;
- un modèle d'intelligence artificielle basé sur des réseaux neuronaux entraînés ;
- un modèle d'intelligence artificielle basé sur des arbres de décision entraînés ;
- un modèle d'intelligence artificielle basé sur des méthodes d'apprentissage automatique.

7. Le procédé selon l'une des revendications précédentes, dans lequel un facteur de correction, en particulier un facteur de correction du côté de l'air ambiant du répartiteur électronique de frais de chauffage radio disposé dans la première pièce, est déterminé à l'aide du modèle dynamique de température ambiante (5) et la température ambiante est en outre déterminée à l'aide du facteur de correction déterminé.

8. Le procédé selon l'une des revendications précédentes, dans lequel un facteur de correction, en particulier un facteur de correction côté air ambiant du répartiteur de frais de chauffage à capacité de communication électronique disposé dans la première pièce, en particulier un répartiteur de frais de chauffage par radio, est modifié dynamiquement dans le temps à l'aide du modèle dynamique de température ambiante (5).

9. Le procédé selon l'une des revendications précédentes, dans lequel la plausibilité d'un facteur de correction du répartiteur de frais de chauffage apte à la communication électronique disposé dans la première pièce, en particulier un répartiteur de frais de chauffage par radio, est vérifiée à l'aide du modèle dynamique de température ambiante (5).

10. Le procédé selon la revendication précédente, dans lequel le facteur de correction déterminé à l'aide du modèle dynamique de température ambiante (5) est comparé à des valeurs minimales et/ou maximales prédéterminées.

11. Le procédé selon l'une des revendications précédentes, dans lequel l'ensemble de paramètres formés est stocké dans une mémoire non volatile du répartiteur de frais de chauffage à capacité de communication électronique, en particulier un répartiteur de frais de chauffage par radio, installé dans la première pièce.

12. Système de détermination de la température ambiante dans une première pièce d'un premier bâtiment, comprenant une entrée de données connectée à un répartiteur de frais de chauffage électronique, en particulier un répartiteur de frais de chauffage radio, placé dans la première pièce, une mémoire de données avec un modèle dynamique de température ambiante (5) stocké dans la mémoire de données, qui a été généré à l'avance à partir de données d'apprentissage d'une pluralité de deuxièmes pièces dans le premier ou le deuxième bâtiment, les données d'apprentissage contenant les deuxièmes températures côté air ambiant mesurées sur les répartiteurs électroniques de frais de chauffage disposés dans les deuxièmes locaux, en particulier les répartiteurs de frais de chauffage radio, les deuxièmes températures côté radiateur et les températures ambiantes mesurées dans les deuxièmes locaux, destinées à la mise en œuvre du procédé selon l'une des revendications précédentes.

| Modelltyp/ -parameter 3 | → | Training ML/ Parameter- anpassung 4 | ← | Filter 2 | ← | Messstrecke 1 |

Modelltyp + -parameter

| Felddaten 6 | → | Dynamisches Modell & Berechnung Kodierparameter 5 | → | Vorhersage Raumtemperaturen & Plausibilierung Kodierung 7 | → | Auswertung/ Statistik/ Monitoring 8 |

FIG 1

**Messstrecke**

Filter 2

stetige Übertragung der Trainingsdaten

Raum in realem Mehrfamilienhaus

FHKV mit min. 2 Temperatursensoren

Raumtemperatur- sensor

$\vartheta_{HKS}$, $\vartheta_{RLS}$
$K_{cl}$, $K_{cw}$

$\vartheta_{RTS}$

ausgestattete MFH/ ZFH/ EFH

Trainingsdaten:
Temperaturwerte
Parameter FHKV
Zeitstempel

Optional [ Gebäudetyp
Raumtyp
Wetterdaten
... ]

1

FIG 2

FIG 3

FIG 4

FIG 5

FIG 6

FIG 7

FIG 8

**EP 4 474 785 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1235130 B1